# EUROPEAN PATENT APPLICATION

(11) **EP 3 300 418 A1**
(43) Date of publication of application: **28.03.2018**
(21) Application number: 16813482.3
(22) Date of filing: 12.01.2016
(51) Int. Cl.: H04W 24/04

(54) **METHOD AND SYSTEM FOR RECOVERING COMMUNICATION STATE AFTER SGW FAILURE, AND MME AND SGW**

(30) Priority: 25.06.2015 CN 201510356967
(71) Applicant: ZTE Corporation, Shenzhen, Guangdong 518057 (CN)
(72) Inventor: BU, Qiaochu, Shenzhen Guangdong 518057 (CN)
(74) Representative: Awapatent AB
(86) International application number: PCT/CN2016/070721
(87) International publication number: WO 2016/206366

(57) **Abstract**

Provided are a method and a system for recovering a communication state for a Serving Gateway (SGW) failure, a Mobility Management Entity (MME) and an SGW. The method includes that: an MME acquires that an SGW fails and a user is in a lost state; and the MME sends a session creation request message to a standby SGW to update session context information in a Packet Data Network Gateway (PGW) through the standby SGW.

## Description

### Technical Field

The present application relates to the technical field of communications, and specifically, to communication state recovery of a Serving Gateway (SGW) failure.

### Background

In a 4th-Generation (4G) core network-Evolved Packet Core (EPC), a Mobility Management Entity (MME), an SGW and a Packet Data Network Gateway (PGW) all use a POOL manner to implement load sharing and redundancy backup between network elements. As long as User Equipment (UE) is re-attached, disaster recovery service of a network element of the EPC may be achieved by reselecting an available MME, SGW and PGW and recreating an Evolved Packet System (EPS) bearer.

Voice over Long Term Evolution (LTE) (VoLTE) is an LTE bearer-based Internet Protocol (IP) Multimedia Subsystem (IMS) voice service. For ensuring reliability of the VoLTE service, a higher requirement is made on reliability of the EPC. Particularly, for a VoLTE call termination service, the UE needs to keep online in real time, ensuring that there is always an available EPS bearer. Therefore, an EPS bearer needs to be recreated as fast as possible to implement service recovery after a network element of the EPC fails.

Under the condition that the PGW detects an SGW failure, when there is downlink data or downlink signaling of the UE, the PGW actively triggers recovery of a user and notifies the MME to page the UE, and after receiving a paging response of the UE, the MME reselects an SGW, so as to ensure service reliability of the user in an LTE network. However, if the UE is in a Suspend state or paging-unreachable state at this moment, the MME cannot page the user, so that user session context information of the SGW cannot be timely recovered, and service reliability cannot be ensured.

### Summary

Embodiments of the present invention provide a method and a system for recovering a communication state for an SGW failure, an MME and an SGW, which may solve the problem that user session context information of the SGW cannot be timely recovered and service reliability cannot be ensured when the MME cannot page a UE in a related art.

An embodiment of the present invention provides a method for recovering a communication state for an SGW recovery, which includes that: an MME acquires that an SGW fails and a user is in a lost state; and the MME sends a session creation request message to a standby SGW to update session context information in a PGW through the standby SGW.

In an exemplary embodiment, the operation that the MME acquires that the SGW fails and the user is in the lost state includes that: the MME acquires that the SGW fails and the user is in the lost state according to a received PGW Downlink Triggering Notification (PDTN) message.

In an exemplary embodiment, the lost state includes a Suspend state or a paging-unreachable state.

In an exemplary embodiment, when the user is in the Suspend state, and after the MME sends the session creation request message to the standby SGW, the method further includes that: the MME sends a Suspend request message to the standby SGW to cause the standby SGW to suspend a bearer resource.

In an exemplary embodiment, that the MME sends the session creation request message to the standby SGW includes that: the MME selects a standby SGW from an SGW pool according to user location information and/or access point information saved before; and the MME sends the session creation request message to the standby SGW.

In an exemplary embodiment, that the session context information in the PGW is updated through the standby SGW includes that: the standby SGW sends a bearer modification request message to the PGW, herein the bearer modification request message contains a control-plane address, a user-plane address and a Tunnel Endpoint Identifier (TEID) of the standby SGW, to cause the PGW to update the session context information according to the bearer modification request message.

An embodiment of the present invention further provides an MME, which includes: an acquisition module, configured to acquire that an SGW fails and a user is in a lost state; and a first sending unit, configured to send a session creation request message to a standby SGW to update session context information in a PGW through the standby SGW.

In an exemplary embodiment, the lost state includes a Suspend state or a paging-unreachable state.

In an exemplary embodiment, when the user is in the Suspend state, the first sending unit is further configured to, after sending the session creation request message to the standby SGW, send a Suspend request message to the standby SGW to cause the standby SGW to suspend a bearer resource.

An embodiment of the present invention further provides an SGW, which includes: a receiving unit, configured to receive a session creation request message from an MME; and a second sending unit, configured to indicate a PGW to update session context information according to the session creation request message.

An embodiment of the present invention further provides a communication system, which includes an MME and an SGW provided by embodiments of the present invention.

An embodiment of the present invention further provides a computer-readable storage medium, which stores computer-executable instructions, the computer-executable instructions are used to execute the method of the embodiment of the present invention.

According to the method the system for recovering a communication state for the SGW failure, the MME and the SGW provided by embodiments of the present invention, the MME may acquire that the SGW fails and the user is in the lost state, and then send the session creation request message to the standby SGW to update the session context information in the PGW through the standby SGW. In such a manner, in case of the SGW failure, even though the user is in the lost state with a network, the network may still timely recover the context information of the user, thereby effectively ensuring service reliability.

### Brief Description of Drawings

FIG. 1 is a flowchart of a method for recovering a communication state for an SGW failure according to an embodiment of the present invention.
FIG. 2 is another flowchart of a method for recovering a communication state for an SGW failure according to an embodiment of the present invention.
FIG. 3 is still another flowchart of a method for recovering a communication state for an SGW failure according to an embodiment of the present invention.
FIG. 4 is a structure diagram of an MME according to an embodiment of the present invention.
FIG. 5 is a structure diagram of an SGW according to an embodiment of the present invention.

### Detailed Description

Embodiments of the present invention will be described below in combination with the drawings in detail. It should be understood that the embodiments described here are not intended to limit the protection scope of the present invention.

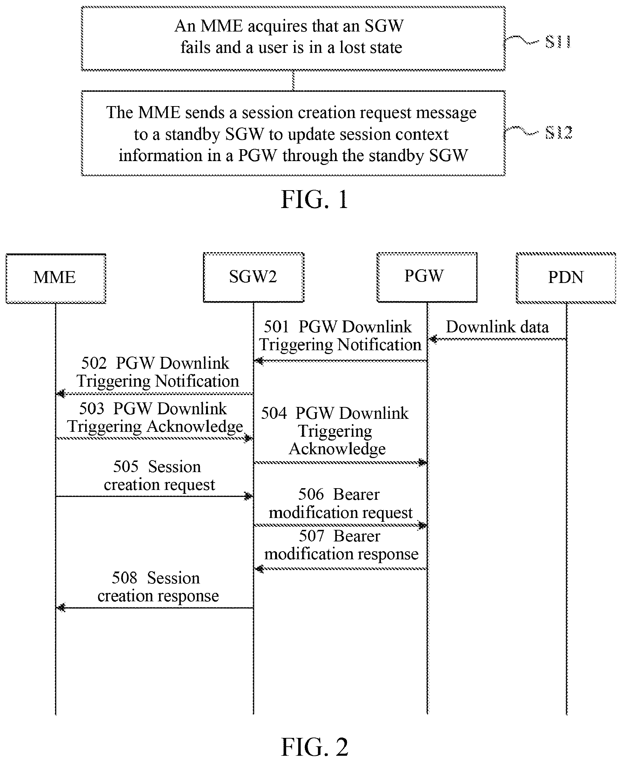

As shown in FIG. 1, an embodiment of the present invention provides a method for recovering a communication state for an SGW failure, which includes the following steps.

In S11, an MME acquires that an SGW fails and a user is in a lost state.

In S12, the MME sends a session creation request message to a standby SGW to update session context information in a PGW through the standby SGW.

According to the method for recovering a communication state for an SGW failure provided by the embodiment of the present invention, the MME may acquire that the SGW fails and the user is in the lost state, and then send the session creation request message to the standby SGW to update the session context information in the PGW through the standby SGW. In such a manner, in case of the SGW failure, even though the user and a network are in the lost state, the network may still timely recover the context information of the user, thereby effectively ensuring service reliability.

In the embodiment, in Step S 11, the MME may acquire that the SGW fails and the user is in the lost state according to a received PDTN message. When the SGW is restarted due to the failure or a link is disconnected, there may not be any response to echo request messages regularly sent to the SGW by the PGW, and then the PGW detects that the link of the SGW is disconnected, thereby determining that the SGW fails. For recovering from the failure, the PGW may initiate the PDTN message after receiving downlink data or downlink signaling of UE, select another available SGW from an SGW Pool, send the PDTN message to the SGW and contain address information of the MME where the user is registered in the message. After receiving the PDTN message, the SGW may forward the PDTN message to the MME according to the IP address information of the MME contained in the message. After receiving the PDTN message, the MME searches in a user context according to an International Mobile Subscriber Identification Number (IMSI) in the message, finds that a state of the user is the lost state, for example, a Suspend state or a paging-unreachable state, and then returns a PGW Downlink Triggering Acknowledge (PDTA) message to the SGW.

In the embodiment, in Step S12, the operation that the MME sends the session creation request message to the standby SGW may include that:
the MME selects a standby SGW from an SGW pool according to user location information and/or access point information saved before; and
the MME sends the session creation request message to the standby SGW.

That is, the MME initiates an SGW reselection flow, selects an available SGW from the SGW Pool as the standby SGW, and sends a session creation request to the standby SGW. The standby SGW sends a bearer modification request message to the PGW to cause the PGW update the session context information for communicating with the new SGW. In such a manner, although the user is in the lost state, a network element in a communication link may timely recover a failure of the link to effectively ensure service reliability.

In Step S12, the operation that the session context information in the PGW is updated through the standby SGW may include that: the standby SGW sends a bearer modification request message to the PGW, the bearer modification request message contains a control-plane address, a user-plane address and a TEID of the standby SGW, to cause the PGW to update the session context information according to the bearer modification request message.

In the embodiment, if the lost state of the user is the paging-unreachable state, after the PGW acquires new user context information, when a signal of the user is recovered, a recovered network may be directly used without recreating a session. If the lost state of the user is the Suspend state, after the operation that the MME sends the session creation request message to the standby SGW in Step S12, the method for recovering a communication state provided by the embodiment of the present invention may further include that: the MME sends a Suspend request message to the standby SGW to cause the standby SGW to suspend a bearer resource. When the signal of the user is recovered, the state directly returns to normal from the Suspend state.

FIG. 2 shows an embodiment that a PGW triggers an SGW to recover a user in an unreachable state when receiving downlink data after the PGW detects that the SGW fails. In the embodiment, a method for an MME to recover the user in the unreachable state when the PGW triggers recovery in case of an SGW failure is provided, and as shown in FIG. 2, includes the following steps.

In Step 201, after detecting that an SGW1 fails, the PGW receives the downlink data, selects a normal SGW2 in an SGW Pool, and sends a PDTN message containing an IMSI of UE and IP address information of an MME where the UE is registered to the SGW2.

In Step 202, the SGW2 forwards the PDTN message to the MME according to the IP address information of the MME.

In Step 203, the MME searches in context information of the user according to the IMSI in the PDTN message, finds that the user is in a paging-unreachable state, and returns a PDTA message to the SGW2.

In Step 204, the SGW2 forwards the PDTA message to the PGW.

In Step 205, the MME initiates an SGW reselection flow, and selects the normal SGW2 in the SGW Pool to create a session, and the MME sends a session creation request containing a control-plane address and a TEID of the MME to the SGW2.

In Step 206, the SGW2 sends a bearer modification request message containing local control-plane and user-plane addresses and TEID of the SGW2 to the PGW to update session context information in the PGW.

In Step 207, the PGW sends a bearer modification response message containing control-plane and user-plane addresses and TEID of the PGW to the SGW2.

In Step 208, the SGW2 sends a session creation response message containing the control-plane and user-plane addresses and TEID of the SGW2 to the MME.

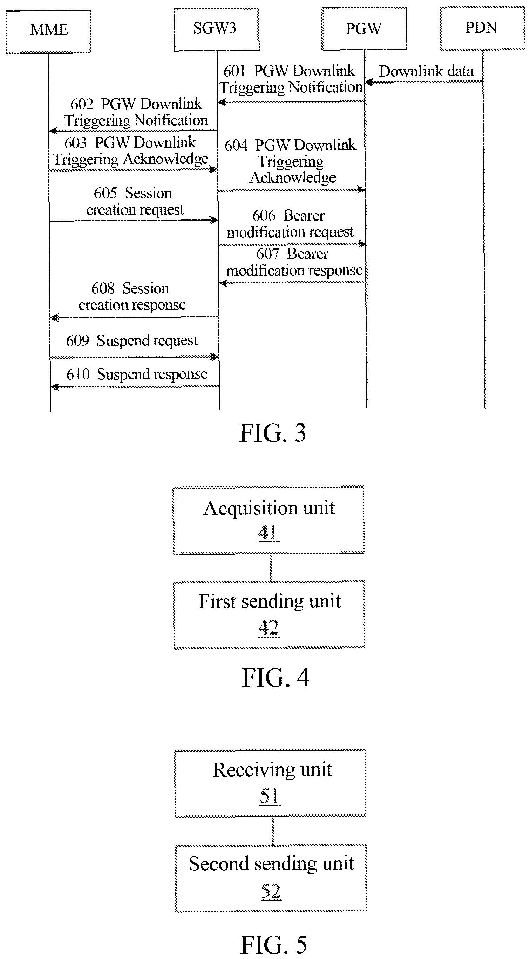

FIG. 3 shows an embodiment that a PGW triggers an SGW to recover a user in a Suspend state when receiving downlink data after the PGW detects that the SGW fails. In the embodiment, a method for an MME to recover the user in the Suspend state when the PGW triggers recovery in case of an SGW failure is provided, and as shown in FIG. 3, includes the following steps.

In Step 301, after detecting that an SGW1 fails, the PGW receives the downlink data, selects a normal SGW3 in an SGW Pool, and sends a PDTN message containing an IMSI of UE and IP address information of an MME where the UE is registered to the SGW3.

In Step 302, the SGW3 forwards the PDTN message to the MME according to the IP address information of the MME.

In Step 303, the MME searches in context information of the user according to the IMSI in the PDTN message, finds that the user is in a paging-unreachable state, and returns a PDTA message to the SGW3.

In Step 304, the SGW3 forwards the PDTA message to the PGW.

In Step 305, the MME initiates an SGW reselection flow, and selects the normal SGW3 in the SGW Pool to create a session, and the MME sends a session creation request containing a local control-plane address and TEID of the MME to the SGW3.

In Step 306, the SGW3 sends a bearer modification request message containing local control-plane and user-plane addresses and TEID of the SGW3 to the PGW to update session context information in the PGW.

In Step 307, the PGW sends a bearer modification response message containing control-plane and user-plane addresses and TEID of the PGW to the SGW3.

In Step 308, the SGW3 sends a session creation response message containing the control-plane and user-plane addresses and TEID of the SGW3 to the MME.

In Step 309, after receiving a session creation success response, if the user is in a Suspend state, the MME sends a Suspend request message to the SGW3 to notify the SGW3 to suspend a bearer resource.

In Step 310, the SGW3 returns a Suspend success response message.

In the embodiments shown in FIG. 3 and FIG. 4, although the PGW and the MME both select the SGW2 as the standby SGW, this is only an alternative manner, and selections by the PGW and the MME may be independent of each other, and the PGW and the MME may select the same SGW, and may also select different SGWs.

Correspondingly, as shown in FIG. 4, an embodiment of the present invention further provides an MME, which includes:
an acquisition unit 41, configured to acquire that an SGW fails and a user is in a lost state; and
a first sending unit 42, configured to send a session creation request message to a standby SGW to update session context information in a PGW through the standby SGW.

According to the MME provided by the embodiment of the present invention, the acquisition unit 41 may acquire that the SGW fails and the user is in the lost state, and then the first sending unit 42 may send the session creation request message to the standby SGW to update the session context information in the PGW through the standby SGW. In such a manner, in case of an SGW failure, even though the user is in the lost state with a network, the network may still timely recover the context information of the user, thereby effectively ensuring service reliability.

In the embodiment, the lost state includes a Suspend state or a paging-unreachable state.

When the user is in the Suspend state, and the first sending unit 42 is further configured to, after sending the session creation request message to the standby SGW, send a Suspend request message to the standby SGW to cause the standby SGW to suspend a bearer resource.

Correspondingly, as shown in FIG. 5, an embodiment of the present invention further provides an SGW, which includes:
a receiving unit 51, configured to receive a session creation request message from an MME; and
a second sending unit 52, configured to indicate a PGW to update session context information according to the session creation request message.

According to the SGW provided by the embodiment of the present invention, the receiving unit 51 may receive the session creation request message from the MME; and the second sending unit 52 may indicate the PGW to update the session context information according to the session creation request message. In such a manner, in case of an SGW failure, even though a user is in a lost state with a network, the network may still timely recover the context information of the user, thereby effectively ensuring service reliability.

In the embodiment, the second sending unit 52 may be configured to send a bearer modification request message to the PGW to cause the PGW to update the session context information.

Correspondingly, an embodiment of the present invention further provides a communication system, which includes any MME provided by the abovementioned embodiment and any SGW provided by the abovementioned embodiment. Therefore, corresponding effects may be achieved, which have been correspondingly described above and will not be elaborated herein.

An embodiment of the present invention further provides a PGW, which includes a storage and at least one processor, herein the storage stores instructions executable by the processor, and the instructions are used to execute the following steps:
when detecting that an SGW fails, after downlink data or downlink signal is received, sending a PDTN message containing address information of an MME where a user is registered to a standby SGW to send the PDTN to the MME through the standby SGW;
receiving a bearer modification request message sent by the standby SGW; and updating session context information according to the bearer modification request message.

The abovementioned communication system further includes the PGW.

The MME of the embodiment of the present invention may include a storage and at least one processor, herein the storage stores instructions executable by the processor, and the instructions are used to execute the steps executed by the MME in the abovementioned embodiment.

The SGW of the embodiment of the present invention may include a storage and at least one processor, herein the storage stores instructions executable by the processor, and the instructions are used to execute the steps executed by the SGW in the abovementioned embodiment.

An embodiment of the present invention further provides a computer-readable storage medium, which stores computer-executable instructions, the computer-executable instructions are used to execute the steps executed by the PGW and/or the MME and/or the SGW in the abovementioned embodiment.

Those skilled in the art should know that an embodiment of the present invention may be provided as a method, a system or a computer program product. Therefore, an embodiment of the present invention may be implemented by using hardware and software or combining the software and the hardware. Moreover, in an embodiment of the present invention may take a form of a computer program product implemented on one or more computer-available storage medium (including, but not limited to, a disk memory and an optical memory) containing computer-available program codes.

The present disclosure is described with reference to flowcharts and/or block diagrams of the method, apparatus (system) and computer program product according to embodiments of the present invention. It should be understood that each flow and/or block in the flowcharts and/or the block diagrams and combinations of the flows and/or blocks in the flowcharts and/or the block diagrams may be implemented by computer program instructions. These computer program instructions may be provided to a universal computer, a dedicated computer, an embedded processor or a processor of another programmable data processing device to generate a machine, so that an apparatus for realizing a function specified in one flow or more flows in the flowcharts and/or one block or more blocks in the block diagrams is generated by the instructions executed through the computer or the processor of the other programmable data processing device.

These computer program instructions may also be stored in a computer-readable memory capable of guiding the computer or another programmable data processing device to work in a specific manner, so that a product including an instruction apparatus may be generated by the instructions stored in the computer-readable memory, the instruction apparatus realizes the function specified in one flow or multiple flows in the flowcharts and/or one block or multiple blocks in the block diagrams.

These computer program instructions may further be loaded onto the computer or another programmable data processing device, so that a series of operating steps are executed on the computer or the other programmable data processing device to generate processing implemented by the computer, and steps for realizing the function specified in one flow or multiple flows in the flowcharts and/or one block or multiple blocks in the block diagrams are provided by the instructions executed on the computer or the other programmable data processing device.

### Industrial Applicability

By the method of the embodiments of the present invention, in case of the SGW failure, even though the user is in the lost state with the network, the network may still timely recover the context information of the user, thereby effectively ensuring service reliability.

## Claims

1. A method for recovering a communication state for a Serving Gateway, SGW, failure, comprising:
acquiring, by a Mobility Management Entity, MME, that an SGW fails and a user is in a lost state; and
sending, by the MME, a session creation request message to a standby SGW to update session context information in a Packet Data Network Gateway, PGW, through the standby SGW.

2. The method according to claim 1, wherein acquiring, by the MME, that the SGW fails and the user is in the lost state comprises:
acquiring, by the MME, that the SGW fails and the user is in the lost state according to a received PGW Downlink Triggering Notification, PDTN, message.

3. The method according to claim 1, wherein the lost state comprises a Suspend state or a paging-unreachable state.

4. The method according to claim 3, wherein when the user is in the Suspend state, and after the MME sends the session creation request message to the standby SGW, the method further comprises:
sending, by the MME, a Suspend request message to the standby SGW to cause the standby SGW to suspend a bearer resource.

5. The method according to claim 1, wherein sending, by the MME, the session creation request message to the standby SGW comprises:
selecting, by the MME, a standby SGW from an SGW pool according to user location information and/or access point information saved before; and
sending, by the MME, the session creation request message to the standby SGW.

6. The method according to claim 1, wherein updating the session context information in the PGW is updated through the standby SGW comprises:
sending, by the standby SGW, a bearer modification request message to the PGW, wherein the bearer modification request message contains a control-plane address, a user-plane address and a Tunnel Endpoint Identifier, TEID, of the standby SGW, to cause the PGW to update the session context information according to the bearer modification request message.

7. A Mobility Management Entity, MME, comprising:
an acquisition module, configured to acquire that a Serving Gateway, SGW, fails and a user is in a lost state; and
a first sending unit, configured to send a session creation request message to a standby SGW to update session context information in a Packet Data Network Gateway, PGW, through the standby SGW.

8. The MME according to claim 7, wherein the lost state comprises a Suspend state or a paging-unreachable state.

9. The MME according to claim 8, wherein when the user is in the Suspend state, the first sending unit is further configured to, after sending the session creation request message to the standby SGW, send a Suspend request message to the standby SGW to cause the standby SGW to suspend a bearer resource.

10. A Serving Gateway, SGW, comprising:
a receiving unit, configured to receive a session creation request message from a Mobility Management Entity, MME; and
a second sending unit, configured to indicate a Packet Data Network Gateway, PGW, to update session context information according to the session creation request message.

11. A communication system, comprising the Mobility Management Entity, MME, according to any one of claims 7-9 and the Serving Gateway, SGW, according to claim 10.

12. A computer-readable storage medium, storing computer-executable instructions, which are used to execute the method according to any one of claims 1-6.
